# EUROPEAN PATENT APPLICATION

(11) **EP 4 685 108 A1**
(43) Date of publication of application: **28.01.2026**
(21) Application number: 24190687.4
(22) Date of filing: 24.07.2024
(51) Int. Cl.: C01B 32/00, B01J 21/18, B01J 37/08, H01M 4/96

(54) **ISOTOPICALLY LABELLED POROUS CARBON MATERIALS, THEIR USES AND METHODS OF PRODUCTION**

(71) Applicant: Albert-Ludwigs-Universität Freiburg, 79098 Freiburg (DE)
(72) Inventor: Fischer, Anna, 79117 Freiburg (DE); Martin, Julian, 79104 Freiburg (DE); Ortlieb, Niklas, 79108 Freiburg (DE)
(74) Representative: noventive Patentanwaltsgesellschaft mbH

(57) **Abstract**

The present invention relates to isotopically labelled carbon materials for use in carbon electrodes or electrocatalysts of electrochemical energy storage or conversion systems. The isotopically labelled carbon materials comprise a N-doped hydrothermal carbon aerogel and/or mesoporous N-doped carbon nanospheres. The invention further relates to electrocatalysts and carbon supports comprising the isotopically labelled carbon materials of the invention. The invention further relates to methods of production and uses of the isotopically labelled carbon materials of the invention.

## Description

### FIELD OF THE INVENTION

The present invention relates to porous isotopically labelled carbon materials for use as supports for electrocatalysts and porous carbon electrodes, and to electrocatalysts and porous carbon electrodes made from these porous isotopically labelled carbon materials. The invention further relates to their methods of production and their uses. In particular, the present invention relates to the use of these porous isotopically labelled carbon materials and isotopically labelled carbon electrodes as tools for the diagnosis of carbon corrosion processes during electrochemical processes, occurring in electrochemical energy storage or electrochemical energy conversion devices.

### BACKGROUND OF THE INVENTION

Carbon-based materials play a vital role as active and/or as support materials in electrochemical processes such as electrochemical energy conversion processes and energy storage processes. Electrochemical energy conversion systems include for example electrolysers, fuel cells, and electrocatalytic systems, whereas electrochemical energy storage systems include batteries and supercapacitors, for example. All these technologies have in common that carbon-based materials may be employed, for example as building blocks for electrodes, conductive additives, as support materials for catalytically active entities, or as active storage material.

Carbon-based materials for use in such electrochemical systems are well known in the art. Martin et al., in "Electrochemical Stability of Platinum Nanoparticles Supported on N-Doped Hydrothermal Carbon Aerogels as Electrocatalysts for the Oxygen Reduction Reaction" (ChemElectroChem 2021, 8, 4835 to 4847) describe methods for the formation of N-doped hydrothermal carbons (N-HTC) from glucose and ovalbumin. These carbons were used as supports for Pt nanoparticles and the resulting Pt/N-HTC materials were used as oxygen reduction reaction (ORR) electrocatalysts. The main limiting factor for the N-HTC carbon supports in such carbon supported Pt nanoparticle catalysts is their tendency to corrode at elevated anodic potentials, as revealed by accelerated stress tests. Nevertheless, the N-HTC carbon supports once optimized are more stable against carbon corrosion than commercial state of the art carbon supports (e.g. Vulcan), making N-HTC an interesting class of carbon supports for the design of fuel cell electrocatalysts. Melke et al. in "Electrochemical stability of silica-templated polyaniline-derived mesoporous N-doped carbons for the design of Pt-based oxygen reduction reaction catalysts" (Carbon 146 (2019) 44 to 59) describe the formation of mesoporous N-doped carbon nanospheres (MPNCs) using oxidative polymerisation of aniline in the presence of SiOz-nanotamplates, and they conduct studies on improving the stability of these MPNCs against carbon corrosion by increasing the carbonization temperature of the MPNC during the synthesis process. While the mentioned studies focus on electrocatalyst design for electrochemical energy conversion, N-HTC and MPNC type carbons may be used in both electrochemical energy conversion processes and electrochemical energy storage processes, including battery applications and supercapacitors.

One example of the application of an electrochemical energy conversion system are proton-exchange membrane fuel cells (PEMFCs). PEMFCs are a type of fuel cell used mainly for transport applications, but also for stationary and portable fuel-cell applications. Their distinguishing features include relatively low temperature/pressure ranges (50 to 100°C) and the use of a proton-conducting polymer electrolyte membrane. PEMFCs generate electricity and operate on the opposite principle to proton exchange membrane (PEM) electrolysis.

Anode and cathode electrocatalysts of PEMFCs may suffer from carbon corrosion under certain operation conditions. This seriously limits the long-term stability of the catalyst layers (catalyst coated substrate [CCS] or catalyst coated membrane [CCM]) and derived membrane electrode assemblies (MEAs), which form the heart of a PEMFC. Anode and cathode electrocatalysts are typically made of platinum-based nanoparticles, nanoclusters and/or single sites supported on porous carbon support particles. When carbon corrosion occurs, the carbon support eventually gets oxidized to CO or CO₂, along with progressive Pt poisoning, Pt detachment, loss of electrode percolation and mechanical coherence. Depending on the degree of graphitization of the utilized carbon, carbon corrosion will occur at different potentials and hence the stability of the catalysts and electrodes can be optimized.

In this context and for the development of PEMFC it is of outmost importance to understand corrosion and degradation mechanisms and to simulate them in so-called accelerated stress tests. There is intensive research on developing "representative" accelerated stress tests, which are in line with real operation degradation mechanisms. In case carbon corrosion occurs, it is important to understand which carbon containing component in the membrane electrode assembly (MEA) degrades.

Currently, diagnostics of carbon corrosion and development of accelerated stress tests rely on PEMFC performance assessment and degradation, as well as post-mortem analysis of the MEA and electrodes (CCS and CCM). When carbon corrosion products are measured, it is unclear if these products are coming solely from the catalysts or also from other carbon containing components in the catalyst layers or the MEA. With state-of-the-art carbon supports such as N-HTC and MPNC, and their derived Pt/C catalysts, it is currently not possible to gain spatially resolved information regarding the occurrence of carbon corrosion within the catalyst layer structure. Thence, there remains a need for providing diagnostic functionality to the carbon support material of electrocatalysts in real time.

Similarly, when it comes to other applications as described above (batteries, supercapacitors, electrolysis, electrocatalysis), there is also a need for diagnosis of carbon material deterioration during use.

Bae et al., in "Enhanced Stability of Coated Carbon Electrode for Li-O2 Batteries and Its Limitations" (Adv. Energy Mater. 2018, 1702661) disclose a comparison of the degradation of a carbon cathode under different conditions. This is achieved by monitoring the carbon cathode of a lithium-air battery. A ¹³C-labelled carbon cathode was coated with zinc oxide and the degradation of the carbon cathode was monitored by detection of ¹³CO₂ during use, using in situ differential electrochemical mass spectrometry. A comparative test was made using an unlabelled carbon cathode. Structures, morphologies and methods of production of the employed ¹³C-labelled species are not disclosed. On the other hand, freestanding (unlabelled) carbon nanotube air electrodes were used as a reference.

US 2015/0239918 A1 concerns functionalised carbon matrix materials formed by pyrolysis of glucose in the presence of one or several amines. ¹³C-labelled glucose was employed to investigate reaction mechanisms. An application to the field of electrocatalyst design and electrochemical carbon corrosion or carbon materials for electrochemical energy storage is not foreseen.

The state of the art therefore constitutes a problem.

### SHORT DESCRIPTION OF THE INVENTION

The present invention is defined in the appended claims.

In particular, the present invention is embodied by an isotopically labelled carbon material for use in a carbon electrode or in an electrocatalyst of an electrochemical energy conversion system or an electrochemical energy storage system. According to the invention, the isotopically labelled carbon material comprises N-HTC, or MPNCs, or both. Further according to the present invention, the isotopic label is ¹³C- and/or ¹⁵N-labelling. Carbon materials are generally used in fuel cell, electrolyser, battery or supercapacitor applications, i.e. as electrode components in electrochemical applications, or for carrying active species such as for example nanocatalysts. It has been found that the use of such isotopically labelled carbon materials allow to monitor the degradation of the carbon material during use, by detection of isotopically labelled degradation products.

According to one embodiment of the present invention, the ¹³C-content of the carbon material is from greater than 1.06% to 100%, based on the total number of carbon atoms in the carbon material, and/or the ¹⁵N-content of the carbon material is from greater than 0.4% to 100%, based on the total number of nitrogen atoms in the carbon material. It has been found that good levels of ¹³C-labelled and/or ¹⁵N-labelled degradation products may be detected even at relatively low ¹³C-labelling and/or ¹⁵N-labelling levels in the carbon material.

According to certain embodiments of the present invention, the isotopically labelled carbon material may consist of N-HTC, such as for example an N-doped hydrothermal carbon aerogel with coral-like nanostructures, or of MPNCs, or of a mixture thereof. It has been found that such carbon materials are particularly useful for electrochemical applications and may be readily provided in isotopically labelled form.

Alternatively, according to certain embodiments of the present invention, the isotopically labelled carbon material may further comprise carbon material, which is not based on N-HTC or MPNC. It has been found that such materials may also be employed advantageously.

Also part of the present invention is an electrocatalyst comprising one or several isotopically labelled carbon materials of the present invention as isotopically labelled carbon supports for catalyst coated substrates and/or catalyst coated membranes, and finely dispersed electrocatalytic entities immobilized on the isotopically labelled carbon supports, wherein the electrocatalytic entities are selected from (i) metal nanoparticles, metal clusters, metal single sites, (ii) nanoparticles or clusters of metallic oxides, carbides, nitrides, sulfides, selenides, phosphides, or coordination complexes, (iii) alloyed configurations of the entities mentioned under (i) or (ii), comprising several metals, (iv) organic moieties, (v) biochemical entities such as enzymes and living cells, and (vi) any mixtures of these. It has been found that the present invention is applicable to a wide variety of electrocatalysts, and that the use of isotopically labelled carbon supports assists in monitoring carbon deterioration during use.

Alternatively, also part of the present invention, is a carbon electrode comprising one or several porous isotopically labelled carbon materials of the present invention. The carbon electrode according to this embodiment of the invention may be a layered carbon electrode comprising individual layers of isotopically labelled carbon materials according to the invention and also individual layers of unlabelled carbon materials. Such carbon electrodes are suitable for use in monitoring carbon deterioration in electrochemical energy storage systems and electrochemical energy conversion systems. The combination of isotopically labelled and unlabelled carbon materials allows for the selective monitoring of different portions of the carbon electrode.

Also part of the present invention is a method of production of the isotopically labelled carbon material of the invention, including the steps of forming isotopically labelled N-HTC and/or isotopically labelled MPNC. According to some embodiments, isotopically labelled N-HTC may be formed by hydrothermal carbonisation of biomass or a biomass-derivative in the presence of an amine, wherein the biomass or biomass-derivative comprises ¹³C-labelled and/or ¹⁵N-labelled biomass or biomass-derivative. Alternatively, the amine may comprise ¹³C-labelled and/or ¹⁵N-labelled amine. Also according to some embodiments of the invention, isotopically labelled MPNC may be formed by oxidative polymerisation of a polymerisation precursor selected from aniline, phenazine, carbazole, pyrrole, dopamine, thiophene or derivates thereof, in the presence of an inorganic colloidal nanotemplate or a structure-directing agent, followed by carbonisation and nanotemplate or structure-directing agent removal, wherein the said polymerisation precursor comprises ¹³C-labelled and/or ¹⁵N-labelled polymerisation precursor. The methods according to the invention work by using readily available isotopically labelled starting materials in production methods known to the skilled person.

According to one embodiment, the biomass or biomass-derivative may be a saccharide or a saccharide-derivative, such as for example glucose or a glucose-derivative. Also according to one embodiment, the amine may be a protein, such as for example ovalbumin.

According to one embodiment, the biomass or biomass-derivative may be fully ¹³C-labelled and/or ¹⁵N-labelled, or the biomass or biomass-derivative may be partially ¹³C-labelled and/or ¹⁵N-labelled. According to some embodiments, the biomass or biomass-derivative may consist of ¹³C-labelled and/or ¹⁵N-labelled biomass or biomass-derivative. According to alternative embodiments, the biomass or biomass-derivative may further comprise unlabelled biomass or biomass-derivative.

Similarly, according to one embodiment, the polymerisation precursor may be fully ¹³C-labelled and/or ¹⁵N-labelled, or the polymerisation precursor may be partially ¹³C-labelled. According to some embodiments, the polymerisation precursor - derivative may consist of ¹³C-labelled and/or ¹⁵N-labelled polymerisation precursor. According to alternative embodiments, the polymerisation precursor may further comprise unlabelled polymerisation precursor.

Finally, according to the above embodiments, the total ¹³C-content of the biomass or biomass-derivative employed in the method of formation may be in the range of greater than 1.06% to 100% of the total number of carbons in the biomass or biomass-derivative and/or the total ¹⁵N-content of the biomass or biomass-derivative may be in the range of greater than 0.4% to 100% of the total number of nitrogen atoms in the biomass or biomass-derivative. Similarly, the total ¹³C-content of the polymerisation precursor employed in the method of formation may be in the range of greater than 1.06% to 100% of the total number of carbons in the polymerisation precursor and/or the total ¹⁵N-content of the polymerisation precursor may be in the range of greater than 0.4% to 100% of the total number of nitrogen atoms in the polymerisation precursor.

The above embodiments concern different options for using fully or partially ¹³C-labelled and/or ¹⁵N-labelled starting materials in the formation of the ¹³C-labelled and/or ¹⁵N-labelled carbon material of the invention. With the different amounts of fully or partially ¹³C-labelled and/or ¹⁵N-labelled starting materials, products having a ¹³C-labeling level of greater than 1.06% to 100% of the total number of carbon atoms and/or a ¹⁵N-labeling of greater than 0.4% to 100% of the total number of nitrogen atoms in the product may be achieved. A specific ¹³C-content and/or ¹⁵N-content in a product may be achieved by employing a combination of fully ¹³C-labelled and/or ¹⁵N-labelled starting material with unlabelled starting material. Alternatively, a specific ¹³C-content and/or ¹⁵N-content in a starting material may be achieved by employing a starting material wherein certain carbon or nitrogen atoms are ¹³C or ¹⁵N, as the case may be. The skilled person in the art will be aware that any combination of unlabelled, partially labelled and fully labelled starting materials may be employed, and the desired level of ¹³C-labeling and/or ¹⁵N-labeling may be predicted using simple calculations.

Also part of the present invention is the use of the isotopically labelled carbon material of the present invention in the formation of a carbon electrode or an electrochemically active carbon composite such as an electrocatalyst and/or a carbon electrode derived therefrom.

Also part of the present invention is the use of the isotopically labelled carbon material of the present invention, or of a carbon electrode or electrochemically active carbon composite such as an electrocatalyst and/or a carbon electrode derived therefrom, in a stress test for determining the amount and nature of carbon material degradation in operation. For example, isotopically labelled carbon materials of the present invention may be used in combination with other carbon materials, which are not based on N-HTC or MPNC.

### SHORT DESCRIPTION OF THE FIGURES

The invention will be further illustrated by reference to the following figures:
Fig. 1 represents scanning electron microscope (SEM) and scanning transmission electron microscope (STEM) images as well as particle size distributions of ¹²C-MPNC (a-d) and ¹³C-MPNC (e-h), obtained according to a method of the present invention;
Fig. 2 represents nitrogen physisorption isotherms (a), pore size distribution (b), cumulative pore volume and surface area (c), the corresponding total pore volume (d) and specific surface area (e) of ¹²C-MPNC (solid lines) and ¹³C-MPNC (dashed lines), obtained according to a method of the present invention;
Fig. 3 represents XRD diffractograms (a), Raman spectra (b) as well as Raman deconvolution (c, d), integral areas of the Raman deconvolution (e), and elemental combustion analysis (f) for ¹²C-MPNC (solid lines) and ¹³C-MPNC (dashed lines), obtained according to a method of the present invention;
Fig. 4 represents an ECMS study with applied voltage and resulting currents, time dependent CO₂ evolution and maximal signal intensity dependent on the applied voltage for ¹²C-MPNC (a, d, g), ¹³C-MPNC (b, e, h) and a 50:50 mixture of ¹²C-MPNC and ¹³C-MPNC (c, f, i);
Fig. 5 represents scanning electron microscope (SEM) micrographs of ¹²C-N-HTC (a-c) and ¹³C-N-HTC (d-f), obtained according to a method of the present invention;
Fig. 6 represents XRD diffractograms (a), Raman spectra (b) as well as Raman deconvolution (c, d), integral areas of the Raman deconvolution (e) and elemental combustion analysis (f) for ¹²C-N-HTC (solid lines) and ¹³C-N-HTC (dashed lines) obtained according to a method of the present invention;
Fig. 7 represents nitrogen physisorption isotherms (a), pore size distribution (b), cumulative pore volume and surface area (c), the corresponding total pore volume (d) and specific surface area (e) of ¹²C-N-HTC (solid lines) and ¹³C-N-HTC (dashed lines), obtained according to a method of the present invention;
Fig. 8 represents an ECMS study with applied voltage and resulting currents, time dependent CO₂ evolution and maximal signal intensity dependent on the applied voltage for ¹²C-N-HTC (a, d, g), ¹³C- N-HTC (b, e, h) and a 50:50 mixture of ¹²C-N-HTC and ¹³C-N-HTC (c, f, i).

It is understood that the following description and references to the figures concern exemplary embodiments of the present invention and shall not be limiting the scope of the claims.

### DETAILED DESCRIPTION OF THE INVENTION

As used herein, a material is considered to be "¹³C-labelled", if within the material, the number of ¹³C is higher than would be expected according to the natural distribution of carbon isotopes within the carbon atoms of the material. ¹²C and ¹³C are the only stable isotopes among the 14 or so known carbon isotopes. The natural proportion of ¹²C to ¹³C is approximately 93:1, ¹²C having a natural abundance of 98.9% and ¹³C having a natural abundance of 1.06%. As used herein, a compound is considered to be "¹³C-labelled" if its ¹³C-content is higher than 1.06%.

As used herein, a material is considered to be "fully ¹³C-labelled", if the proportion of ¹³C atoms among all C atoms within the material is close to 100%, for example, if the proportion of ¹³C atoms among all C atoms within the material is 90% or higher, or 95% or higher, or 99% or higher, or even 99.5% or higher.

As used herein, a material is considered to be "¹³C-unlabelled" or "unlabelled", if the relative abundance of C isotopes within the material corresponds to or is close to the natural isotopic distribution.

As used herein, a material is considered to be "partially ¹³C-labelled", if the proportion of ¹³C atoms among all C atoms within the material is higher than the natural proportion, i.e. if the proportion of ¹³C atoms among all C atoms within the material is higher than 1.06%, but less than 99.5%. For example, a partially ¹³C-labelled material may contain a proportion of ¹³C atoms among all C atoms of 5% or higher, or of 10% or higher, or of 20% or higher, or of 30% or higher, or of 40% or higher, or of 50% or higher, or of 60% or higher, or of 70% or higher, or of 80% or higher, or of 90% or higher, or of 90% or higher. A partially ¹³C-labelled material may contain ¹³C only in specific positions of the compound molecule. Alternatively, a partially ¹³C-labelled material may contain ¹³C in any positions of the material. A partially ¹³C-labelled material may also consist of a mixture of fully ¹³C-labelled material and partially ¹³C-labelled material, or of a mixture of fully ¹³C-labelled material and unlabelled material, or of a mixture of partially ¹³C-labelled material and unlabelled material.

As used herein, a material is considered to be "¹⁵N-labelled", if within the material, the number of ¹⁵N is higher than would be expected according to the natural distribution of nitrogen isotopes within the nitrogen atoms of the material. ¹⁴N and ¹⁵N are the only stable isotopes among the known nitrogen isotopes. The natural proportion of ¹⁴N to ¹⁵N is approximately 249:1, ¹⁴N having a natural abundance of 99.6% and ¹⁵N having a natural abundance of 0.4%. As used herein, a compound is considered to be "¹⁵N-labelled" if its ¹⁵N-content is higher than 0.4%.

As used herein, a material is considered to be "fully ¹⁵N-labelled", if the proportion of ¹⁵N atoms among all N atoms within the material is close to 100%, for example, if the proportion of ¹⁵N atoms among all N atoms within the material is 90% or higher, or 95% or higher, or 99% or higher, or even 99.5% or higher.

As used herein, a material is considered to be "¹⁵N-unlabelled" or "unlabelled", if the relative abundance of N isotopes within the material corresponds to or is close to the natural isotopic distribution.

As used herein, a material is considered to be "partially ¹⁵N-labelled", if the proportion of ¹⁵N atoms among all N atoms within the material is higher than the natural proportion, i.e. if the proportion of ¹⁵N atoms among all N atoms within the material is higher than 0.4%, but less than 99.5%. For example, a partially ¹⁵N-labelled material may contain a proportion of ¹⁵N atoms among all N atoms of 1% or higher, or of 5% or higher, or of 10% or higher, or of 20% or higher, or of 30% or higher, or of 40% or higher, or of 50% or higher, or of 60% or higher, or of 70% or higher, or of 80% or higher, or of 90% or higher, or of 90% or higher. A partially ¹⁵N-labelled material may contain ¹⁵N only in specific positions of the compound molecule. Alternatively, a partially ¹⁵N-labelled material may contain ¹⁵N in any positions of the material. A partially ¹⁵N-labelled material may also consist of a mixture of fully ¹⁵N-labelled material and partially ¹⁵N-labelled material, or of a mixture of fully ¹⁵N-labelled material and unlabelled material, or of a mixture of partially ¹⁵N-labelled material and unlabelled material.

The present invention according to the appended claims provides isotopically labelled carbon materials based on N-HTC and MPNC, and electrocatalysts and carbon electrodes derived therefrom.

N-HTCs are sustainable N-doped carbon aerogels well known in the art. They may be formed by hydrothermal carbonisation of low-cost precursors such as biomass or biomass-derivatives (for example saccharides) as a carbon source and protein as a nitrogen source and structure directing agent. For example, glucose and ovalbumin may be considered suitable precursors, but other precursors may be considered. Parameters such as surface chemistry, crystallinity, conductivity, wettability, porosity, degree of carbonisation and N-functionalisation (such as pyridinic functionalities) of N-HTC may be adapted by adjusting parameters such as pyrolysis temperature and additional thermal treatments. These adaptable parameters may be used to fine-tune the catalytic activity of unloaded and loaded N-HTCs.

Unloaded N-HTCs display catalytic activity, for example in the oxygen reduction reaction. They may also be employed as metal-loaded catalysts, for example with platinum nanoparticle loading. In the case platinum nanoparticle loaded N-HTCs, an increase of pyrolysis temperature generally leads to a decreased catalytic activity but improved long-term stability, and in practice a compromise between these parameters needs to be found, depending on the desired application in heterogeneous catalysis, electrochemical energy storage applications or electrochemical energy conversion applications.

MPNCs are porous carbon particles with adjustable properties. Due to their large specific surface area, good conductivity and chemical stability, a broad range of applications is available in various fields such as catalysis, sensing, electrochemical energy conversion and storage, but also purification and drug delivery. Using novel production methods, the particle diameter distribution and pore diameter distribution are independently adjustable. In addition, narrow particle diameter distributions (expressed as particle diameter dispersities) and narrow pore size distributions (expressed as pore size dispersities) may be achieved.

MPNCs may be arranged in a regular matrix to form porous carbon supports for catalysts or carbon electrodes. Interparticle pore volume may also be controlled during matrix assembly, thereby allowing to tune of e.g. electrolyte access in carbon electrodes, substrate access in catalytic applications, catalyst loading in applications as catalytic support, and so on.

N-HTCs and MPNCs are accordingly highly promising carbon materials for use as carbon supports and carbon electrodes in electrocatalytic applications, electrochemical energy storage applications and electrochemical energy conversion applications.

N-HTCs are generally produced by hydrothermal carbonisation of biomass or a biomass-derivative in the presence of an amine. The biomass or a biomass-derivative may be a saccharide or a saccharide derivative, such as for example glucose or a glucose-derivative. The amine may be a protein, such as for example ovalbumin. MPNCs are generally produced by oxidative polymerisation of a polymerisation precursor in the presence of an inorganic colloidal nanotemplate, followed by carbonisation and nanotemplate removal. The polymerisation precursor may be selected from aniline, phenazine, carbazole, pyrrole, dopamine, thiophene or mixtures or derivatives thereof.

According to various embodiments as described above, the starting materials (biomass or biomass-derivative for N-HTCs; polymerisation precursor for MPNCs) may be employed in various proportions of fully ¹³C- and/or ¹⁵N-labelled, partially ¹³C- and/or ¹⁵N-labelled and unlabelled starting materials. For example, fully ¹³C-labelled glucose may be employed in the formation of N-HTCs, or a 50:50-mixture of fully ¹³C-labelled glucose and unlabelled glucose. Or, fully ¹⁵N-labelled ovalbumin may be employed in the formation of N-HTCs, or a 50:50-mixture of fully ¹⁵N-labelled ovalbumin and unlabelled ovalbumin. Alternatively, a partially labelled ovalbumin may be employed, or a mixture of partially labelled glucose and unlabelled ovalbumin. Similarly for example, fully ¹³C-labelled aniline may be employed in the formation of MPNCs, or a 50:50-mixture of fully ¹³C-labelled aniline and unlabelled aniline. Or, fully ¹⁵N-labelled aniline may be employed in the formation of MPNCs, or a 50:50-mixture of fully ¹⁵N-labelled aniline and unlabelled aniline. Alternatively, a partially labelled aniline may be employed, or a mixture of partially labelled aniline and unlabelled aniline. It is of course also possible to employ mixtures of ¹³C-labelled and ¹⁵N-labelled starting materials, or starting materials that carry both ¹³C- and ¹⁵N-labels.

These embodiments cover different situations. When taking into account only ¹³C-labelling and ignoring ¹⁵N-labelling, in a first situation, the ¹³C-labelled starting material is fully ¹³C-labelled starting material, and it is exclusively used. This leads to the formation of a fully ¹³C-labelled product. In a second situation, the ¹³C-labelled starting material is partially ¹³C-labelled starting material, and it is exclusively used. This leads to the formation of a partially ¹³C-labelled product, and the level of ¹³C-labelling of the produced carbon material corresponds to the level of ¹³C-labelling of the starting material. In a third situation, a mixture of one or several partially¹³C-labelled starting materials and optionally fully ¹³C-labelled starting material and further optionally unlabelled starting material is used. This leads to the formation of a partially ¹³C-labelled product, and the level of ¹³C-labelling of the produced carbon material corresponds to the overall ratio of ¹³C to ¹²C present in the mixture of starting materials. As a result, the skilled person in the art will be able to foresee the level of ¹³C-labelling in the product on the basis of the known amount of ¹³C-labelling in the starting materials.

Similarly, when taking into account only ¹⁵N-labelling and ignoring ¹³C-labelling, in a first situation, the ¹⁵N-labelled starting material is fully ¹⁵N-labelled starting material, and it is exclusively used. This leads to the formation of a fully ¹⁵N-labelled product. In a second situation, the ¹⁵N-labelled starting material is partially ¹⁵N-labelled starting material, and it is exclusively used. This leads to the formation of a partially ¹⁵N-labelled product, and the level of ¹⁵N-labelling of the produced carbon material corresponds to the level of ¹⁵N-labelling of the starting material. In a third situation, a mixture of one or several partially ¹⁵N-labelled starting materials and optionally fully ¹⁵N-labelled starting material and further optionally unlabelled starting material is used. This leads to the formation of a partially ¹⁵N-labelled product, and the level of ¹⁵N-labelling of the produced carbon material corresponds to the overall ratio of ¹⁵N to ¹⁴N present in the mixture of starting materials. As a result, the skilled person in the art will be able to foresee the level of ¹⁵N-labelling in the product on the basis of the known amount of ¹⁵N-labelling in the starting materials.

For the better understanding of the stability and reactivity of carbon materials, carbon catalyst supports and carbon electrodes in energy conversion and energy storage systems, it is imperative to understand degradation mechanisms during use. Employing fully or partially ¹³C- and/or ¹⁵N-labelled carbon materials, carbon catalyst supports and carbon electrodes will allow for the monitoring of degradation during actual use. Improved understanding of degradation mechanisms may lead to improved design of carbon materials, carbon catalyst supports, carbon-based catalysts and carbon electrodes derived thereof.

For example, with the ¹³C- and/or ¹⁵N-labelled carbon materials according to the present invention, it will also be possible to produce carbon film electrodes comprising different levels of ¹³C- and/or ¹⁵N-labelling in different portions of the electrodes, allowing the measurement of electrode degradation in different layers or lateral segments of the electrodes. For example, an electrode could be provided comprising isotopically unlabelled layers towards its exterior surface, and fully ¹³C- or ¹⁵N.labelled film towards the interior layers of the electrode, i.e. towards the current collector. Assuming that the exterior (unlabelled) area of the electrode has a relatively high exposure to electrolyte and relatively high ion exchange rate in the surroundings of the electrode, and that the interior (labelled) area of the electrode has a relatively low exposure to electrolyte and a relatively low ion exchange rate in the surroundings of the electrode, measurement of relative evolution of ¹²CO₂ and ¹³CO₂ may offer information on the relative degradation rates in the different areas of the so-configured electrode. Similar studies may be carried out with catalyst layers. Put in different words, the present invention will allow gaining spatially resolved information regarding the occurrence of carbon corrosion within a carbon-based electrode structure, for example within a catalyst layer or a supercapacitor electrode structure.

The isotopically labelled carbon materials according to the present invention may be formed by employing methods as known in the art for the formation of the corresponding unlabelled materials, adapted by employing isotopically labelled starting materials.

Accordingly, in methods for forming ¹³C- or ¹⁵N-labelled N-HTC according to the present invention, a method known in the art employing hydrothermal carbonisation of biomass or a biomass-derivative in the presence of an amine, the said biomass or biomass-derivative is replaced by fully or partially ¹³C- or ¹⁵N-labelled biomass or biomass-derivative. The said fully or partially ¹³C- or ¹⁵N-labelled biomass or biomass-derivative may for example be fully or partially ¹³C- or ¹⁵N-labelled saccharide or saccharide-derivative, such as for example fully or partially ¹³C- or ¹⁵N-labelled glucose or glucose-derivative. The surface area and nitrogen content of the N-HTC may be controlled by adapting the graphitization temperature.

Similarly, in methods for forming ¹³C- or ¹⁵N-labelled MPNCs according to the present invention, a method known in the art employing oxidative polymerisation of a polymerisation precursor, the said polymerisation precursor is replaced by fully or partially ¹³C- or ¹⁵N-labelled polymerisation precursor, such as for example fully or partially ¹³C- or ¹⁵N-labelled aniline, phenazine, carbazole, pyrrole, dopamine, thiophene or derivatives thereof.

MPNCs may be formed by employing soft-templating or hard-templating approaches. In soft-template approaches, structure-directing agents, such as surfactant molecules/copolymers that serve as templates are self-assembled into micelles which interact with the material matrix to be structured. The porous structure is formed by removing the micelles through washing steps and/or heat treatment. The pore structure is controlled by the size, chemical composition, thermal properties and concentration of the copolymer/surfactant molecule used. However, controlling the pore size is rather difficult and can only be adjusted within a limited range (< 30 nm), since the process relies on the formation of micelles and is usually based on heat treatment/calcination, which can lead to pore closure, considering the low thermal stability of the copolymer. At the same time, soft-templating generally requires the use of expensive surfactants and block copolymers, which is unfavorable for large-scale production. The hard-templating approach is based on polymerization or thermal condensation of a carbon precursor around a thermally stable inorganic template followed by carbonization. The porous structure is formed by removing the template, which is usually done by etching. The pore size and shape usually correspond to the properties of the template. Therefore, the use of a predefined template with specific structural characteristics allows the pore structure to be tailored over a wide range (from microporous over mesoporous to macroporous). Moreover, the surface composition and heteroatom doping can be adjusted when using different carbon sources. Due to the variety of templates and their good thermal stability, hard templating has proven to be a reliable approach with excellent reproducibility and scalability, facilitating control over porous structures. It has recently become possible to independently control particle size and pore size using hard-templating techniques. Using independent control of particle size and pore size of MPNCs, it has become possible to form carbon electrodes allowing to adjust both intraparticulate pore sizes (or surface area) for charge storage or catalysis, and particle diameter for optimized mass transport.

Detection of ¹²CO₂ and ¹³CO₂ may be carried out, for example, by electrochemical mass spectrometry (EC-MS). The same applies to nitrogen degradation products based on ¹⁴N and ¹⁵N. The EC-MS system is a system where an electrochemical measurement cell or device is directly coupled with a mass spectrometer via a silicon chip that is directly placed below the working electrode (distance ca. 100 µm). Below the chip, a carrier gas can be applied which is typically argon or helium. A gas exchange takes place through the silicon chip, whereby the electrolyte in the measuring cell is degassed with the carrier gas and at the same time gases and volatile compounds formed during the electrochemical measurement pass through the chip into the mass spectrometer. As the passage through the chip is not quantitative, EC-MS measurements are generally used for qualitative investigations of the reaction products. However, semi-quantitative calibration of the mass spectrometer is possible through calibration with special test gas mixtures.

Accelerated stress testing (AST) replicates real-world conditions, generating essential evaluation data to ensure the longevity and reliability of a product. In electrochemical applications, e.g. proton exchange membrane fuel cells (PEMFCs), different stress test protocols are applied (recommended e.g. by the Department of Energy, DoE) which target different material components. AST can be performed in rotating disk electrode (RDE) measurements or MEA or other electrochemical setup, to investigate the corrosion of device components, e.g. catalyst (support) materials, i.e. of the porous carbon materials. In particular, to study the carbon support corrosion a triangle sweep cycle: 500 mV/s between 1.0 V and 1.5 V (10,000 to 30,000 cycles or more) is applied and the electrochemical performance before and after the AST is evaluated (and if necessary at intermediate steps). To tackle platinum catalyst stability square wave potential cycles (10,000 to30,000 cycles or more) between 0.6 V (3 s) and 0.95 V (3 s) are applied.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

### EXAMPLES

¹³C-labelled mesoporous N-doped carbon nanospheres (¹³C-MPNCs) were synthesised and characterised (Example 1) and prepared into a carbon film electrode (Example 2). The electrode underwent a carbon stress test and the evolution of ¹³CO₂ was measured to monitor deterioration of the carbon film electrode (Example 3).

### Example 1: Synthesis of unlabelled and ¹³C-labelled mesoporous N-doped carbon nanospheres

200 mL MilliQ H₂O was transferred into a 500 mL round-bottom flask and cooled down by an ice bath. 25 mL 1M·HCl, 2 mL aniline and 5.75 mL colloidal silica (Ludox TMA; 23 nm, 34 wt.-%, 1.23 g/mL) were added subsequently and the mixture was stirred until a homogeneous solution was formed. In the meantime, 5.01 g ammonium persulfate (APS) was dissolved in 10 mL 1M·HCl. To induce polymerization of aniline, the APS solution was added to the round-bottom flask dropwise over 10 min (1 mL·min⁻¹) by using a peristaltic pump (molar ratio APS:aniline 1:1). The mixture was then stirred for 24 h while keeping the reaction flask cooled in the ice bath.

The formed PANI/SiO₂ composite polymer particles were collected by centrifugation (9000 rpm, 10 min) and redispersed in fresh water. This washing step was repeated at least 10 times until the pH of the solution was neutral. The obtained nanocomposite material was subjected to freeze-drying to prevent morphology change. The freeze-dried powder was transferred in a calcination boat and heated to 1000°C under a nitrogen atmosphere with a heating ramp of 200 K/h and a holding time of 6 h. To remove the silica template from the carbonized sample, the composite material was etched with 4M·NH₄HF₂ solution (50 mL·g⁻¹ of sample) for 48 h, resulting in a mesoporous N-doped carbon (MPNC). The MPNC was separated from the etching solution by filtration. The wet filtrate was redispersed in fresh H₂O and stirred for 12 h to wash out any NH₄HF₂ residuals. This washing step was repeated 4 times, followed by washing with ethanol. The wet filtrate was dried under vacuum for 24 h. The resulting dry powder was annealed at 500°C under a nitrogen atmosphere with a heating ramp of 200 K·h⁻¹ for 2 h to remove insoluble residuals from the etching step. The final MPNC powder was recovered with a yield of 0.88 g (43 %) and was denoted as ¹²C-MPNC.

¹³C-labelled MPNC was synthesized by replacing the aniline with fully ¹³C-labelled aniline. The resulting sample was denoted as ¹³C-MPNC and recovered with a yield of 0.80 g (39%).

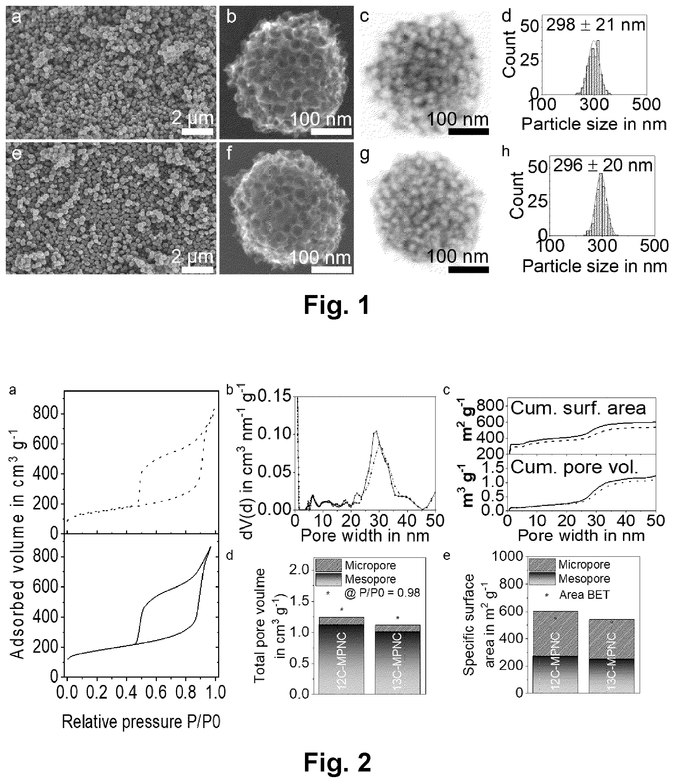

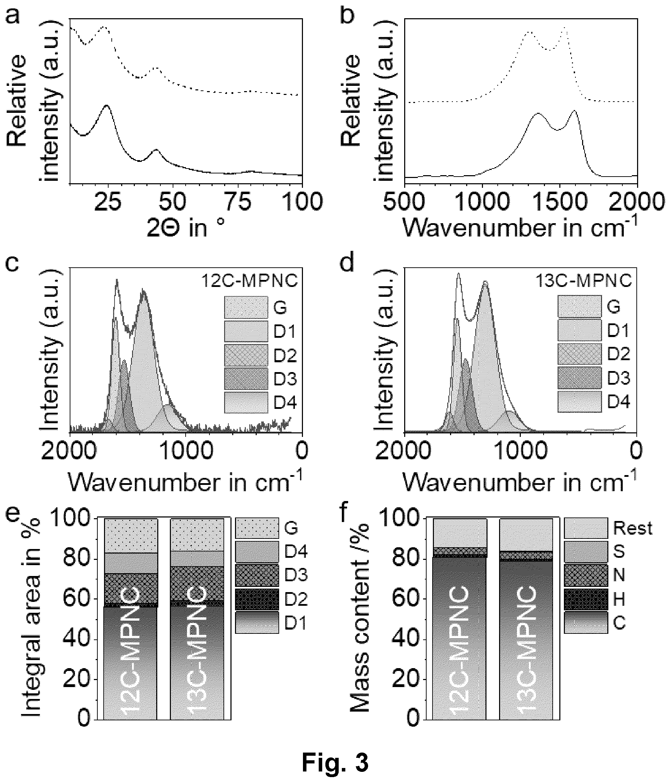

Fig. 1 represents SEM and STEM images and particle size distributions of the obtained samples of ¹²C-MPNC (a to d) and ¹³C-MPNC (e to h). Fig. 2 represents nitrogen physisorption isotherms (a), pore size distribution (b), cumulative pore volume and surface area (c), the corresponding total pore volume (d) and specific surface area (e) of ¹²C-MPNC (solid lines) and ¹³C-MPNC (dashed lines). In Fig. 3, XRD analysis, Raman spectroscopy analysis and elemental combustion analysis are represented for ¹²C-MPNC (solid lines in (a), (b), as well as subfigures (c) and (e)) and ¹³C-MPNC (dashed lines in (a), (b), as well as subfigures (d) and (f)). It can be seen that the quality of the obtained samples is not affected by the replacement of aniline with ¹³C-labelled aniline, and that the production of ¹³C-MPNC may be based on the equivalent production of ¹²C-MPNC without noticeable effect on product quality.

### Example 2: Preparation of carbon film electrodes

To prepare carbon film electrodes, about 3 mg MPNC powder obtained in Example 1 was mixed with 995 µL water and 250 µL isopropanol as a solvent and 5 µL Nafion solution (5 wt.-%) as a binder. The mixture was then tip sonicated for at least 30 minutes (40% amplitude, 2 sec on-time, 2 sec off-time). 10 µL of the resulting ink was drop-coated on a rotation disk electrode (RDE, 5 mm diameter) and dried under rotation. After the film had dried, the RDE was transferred to a drying oven and was kept there for 30 minutes at 60°C. Three different MPNC inks and therefore three types of electrodes were prepared: pure ¹²C-MPNC, pure ¹³C-MPNC and a 50:50 mixture of ¹²C-MPNC and ¹³C-MPNC.

### Example 3: Determination of unlabelled and ¹³C-labelled CO₂ formation

The prepared electrodes from Example 2 were inserted into an EC-MS measurement system as a working electrode. A platinum mesh was used as counter electrode, a reversible hydrogen electrode (RHE) was used as a reference electrode and 0.5 M perchloric acid was used as the electrolyte. The electrolyte was degassed in-situ with helium which was used as carrier gas in the EC-MS system.

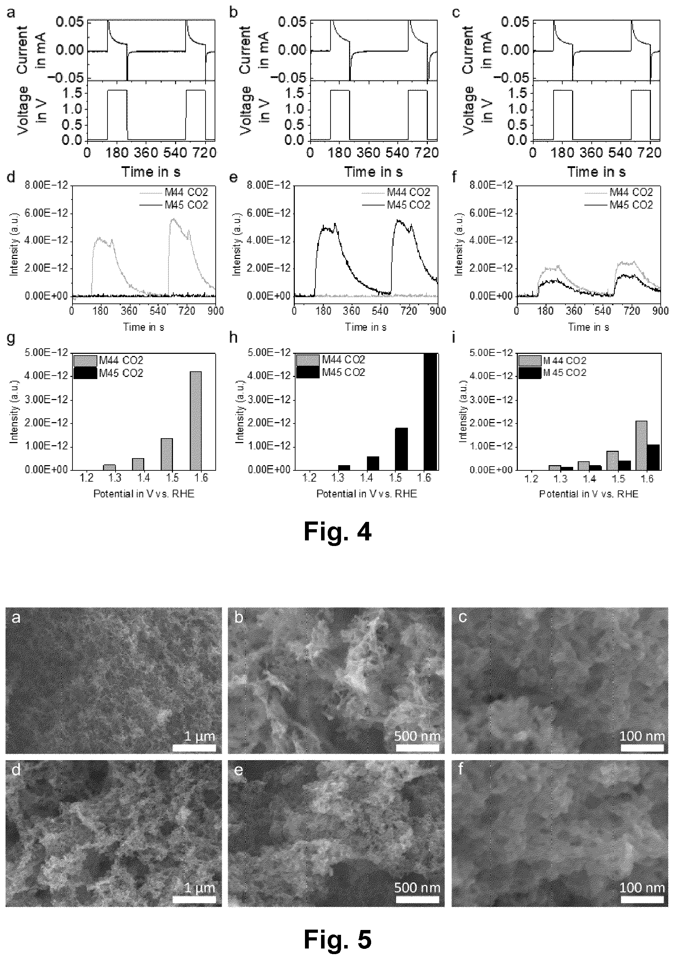

To perform the carbon stress test, a defined constant potential was applied over two minutes and the current response as well as the MS signal of M44 and M45 CO₂ was detected over this time period. After relaxation of the MS signal, the constant potential was applied a second time for another two minutes, followed by another relaxation period. This process was repeated for increasing potentials of 1.0 V, 1.1 V, 1.2 V, 1.3 V, 1.4 V, 1.5 V and 1.6 V vs. RHE, while the potential in the relaxation period was set to 0.05 V vs. RHE. As seen in Fig. 4, evolution of ¹²CO₂ is detected with the pure ¹²C-MPNC-electrode, and evolution of ¹³CO₂ is detected with the pure ¹³C-MPNC-electrode, whereas no significant evolution of ¹³CO₂ is detected with the pure ¹²C-MPNC-electrode, and no significant evolution of ¹²CO₂ is detected with the pure ¹³C-MPNC-electrode. In the case of the electrode made of a 50:50 mixture of ¹²C-MPNC and ¹³C-MPNC, evolution of both ¹²CO₂ and ¹³CO₂ is detected.

### Example 4: Synthesis of unlabelled and ¹³C-labelled N-doped hydrothermal carbon (N-HTC)

1.5 g glucose and 0.3 g ovalbumin were transferred into a 45 mL glass-tube. 13.5 mL MilliQ H₂O was added and the mixture was stirred until a homogeneous solution was formed. The glass tube was placed in a Teflon-inlet lined 45 mL steel autoclave and heated to 180°C for 5.5 h in a heating furnace.

The formed carbon monolith was washed in excess with fresh water and ethanol. This washing step was repeated at least 10 times until the pH of the solution was neutral. The obtained carbon material was subjected to freeze-drying to prevent morphology change. 300 mg of the freeze-dried carbon material was transferred in a calcination boat and heated to 1000°C under a nitrogen atmosphere with a heating ramp of 200 K/h and a holding time of 6 h. After the carbonization step, the product was ground down with a mortar. The final N-HTC powder was recovered with a yield of 40 % and was denoted as ¹²C-N-HTC.

¹³C-labelled N-HTC was synthesized by replacing the glucose with fully ¹³C-labelled glucose. The resulting sample was denoted as ¹³C-N-HTC and was recovered with a yield of 39%.

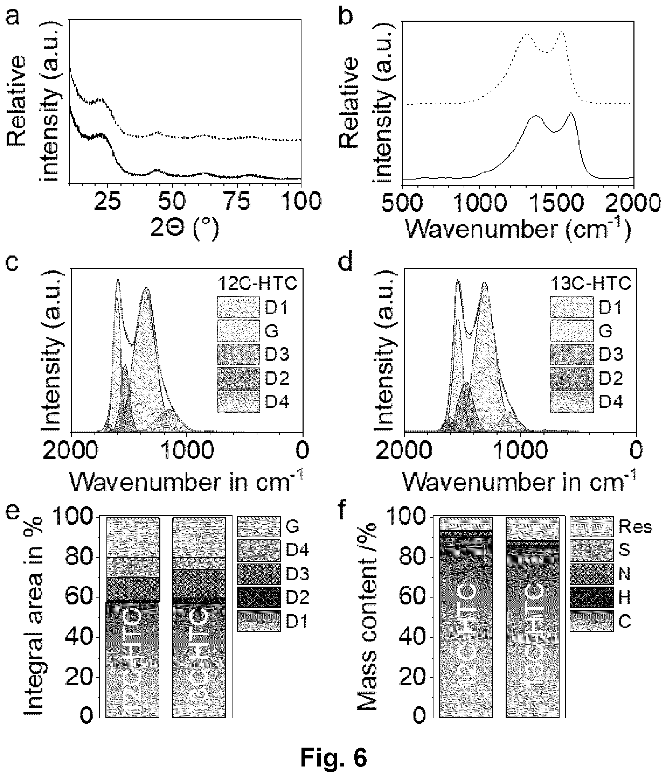

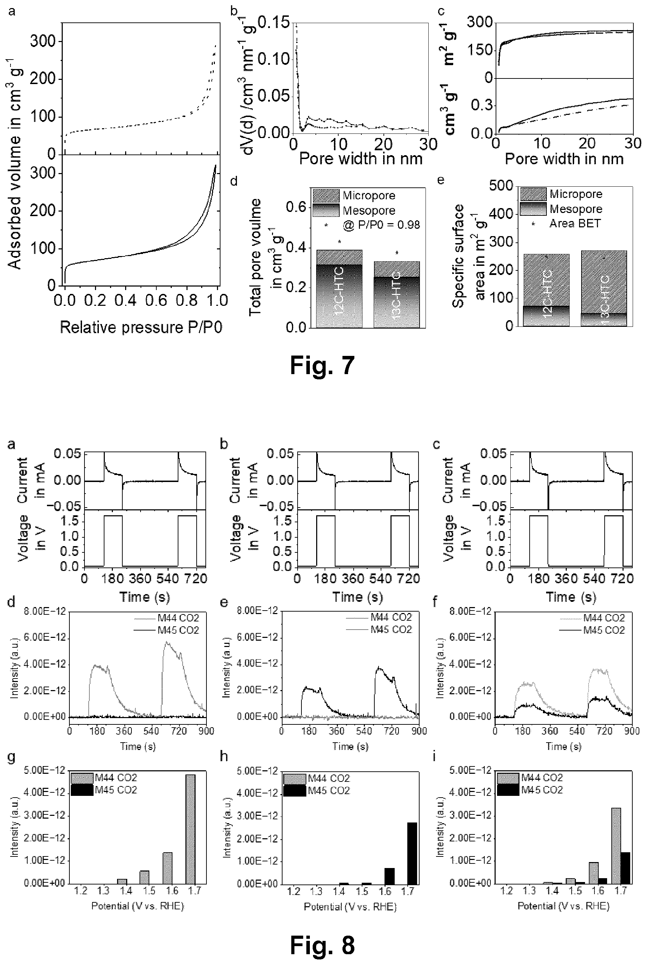

Fig. 5 represents SEM micrographs of the obtained samples of ¹²C-N-HTC (a to c) and ¹³C-N-HTC (d to f). Fig. 6 represents nitrogen physisorption isotherms (a), pore size distribution (b), cumulative pore volume and surface area (c), the corresponding total pore volume (d) and specific surface area (e) of 12C-N-HTC (solid lines) and 13C-N-HTC (dashed lines). In Fig. 7, XRD analysis, Raman spectroscopy analysis and elemental combustion analysis are represented for ¹²C-N-HTC (solid lines in (a), (b), as well as subfigures (c) and (e)) and ¹³C-N-HTC (dashed lines in (a), (b), as well as subfigures (d) and (f)). It can be seen that the quality of the obtained samples is not affected by the replacement of aniline with ¹³C-labelled glucose, and that the production of ¹³C-N-HTC may be based on the equivalent production of ¹²C-N-HTC without noticeable effect on product quality.

### Example 5: Preparation of carbon film electrodes

To prepare carbon film electrodes, about 3 mg N-HTC powder obtained in Example 4 was mixed with 995 µL water and 250 µL isopropanol as a solvent and 5 µL Nafion solution (5 wt.-%) as a binder. The mixture was then tip sonicated for at least 30 minutes (40% amplitude, 2 sec on-time, 2 sec off-time). 10 µL of the resulting ink was drop-coated on a rotation disk electrode (RDE, 5 mm diameter) and dried under rotation. After the film had dried, the RDE was transferred to a drying oven and was kept there for 30 minutes at 60°C. Three different N-HTC inks and therefore three types of electrodes were prepared: pure ¹²C-N-HTC, pure ¹³C-N-HTC and a 50:50 mixture of ¹²C-N-HTC and ¹³C-N-HTC.

### Example 6: Determination of unlabelled and ¹³C-labelled CO₂ formation

The prepared electrodes from Example 5 were inserted into an EC-MS measurement system as a working electrode. A platinum mesh was used as counter electrode, a reversible hydrogen electrode (RHE) was used as a reference electrode and 0.5 M perchloric acid was used as the electrolyte. The electrolyte was degassed in-situ with helium which was used as carrier gas in the EC-MS system.

To perform the carbon stress test, a defined constant potential was applied over two minutes and the current response as well as the MS signal of M44 and M45 CO₂ was detected over this time period. After relaxation of the MS signal, the constant potential was applied a second time for another two minutes, followed by another relaxation period. This process was repeated for increasing potentials of 1.0 V, 1.1 V, 1.2 V, 1.3 V, 1.4 V, 1.5 V, 1.6 V and 1.7 V vs. RHE, while the potential in the relaxation period was set to 0.05 V vs. RHE. As seen in Fig. 8, evolution of ¹²CO₂ is detected with the pure ¹²C-N-HTC-electrode, and evolution of ¹³CO₂ is detected with the pure ¹³C-N-HTC-electrode, whereas no significant evolution of ¹³CO₂ is detected with the pure ¹²C-N-HTC-electrode, and no significant evolution of ¹²O₂ is detected with the pure ¹³C-N-HTC-electrode. In the case of the electrode made of a 50:50 mixture of ¹²C-N-HTC and ¹³C-N-HTC, evolution of both ¹²CO₂ and ¹³CO₂ is detected.

## Claims

1. Isotopically labelled carbon material for use in a carbon electrode or in an electrocatalyst of an electrochemical energy conversion system or an electrochemical energy storage system, wherein the said isotopically labelled carbon material comprises a N-doped hydrothermal carbon aerogel (N-HTC) and/or mesoporous or macroporous N-doped carbon nanospheres (MPNCs), and wherein the said isotopical label is ¹³C and/or ¹⁵N-labelling.

2. Isotopically labelled carbon material according to claim 1, wherein the ¹³C-content is from greater than 1.06% to 100% of the total number of carbon atoms in the carbon material, and/or wherein the ¹⁵N-content is from greater than 0.4% to 100% of the total number of nitrogen atoms in the carbon material.

3. Isotopically labelled carbon material according to any one of the previous claims which consists of a N-HTC, such as an N-doped hydrothermal carbon aerogel with coral-like nanostructures, or of MPNCs, or mixtures thereof.

4. Isotopically labelled carbon material according to any one of claims 1 to 3, which further comprises carbon material, which is not based on N-HTC or MPNC.

5. Electrocatalyst comprising one or several isotopically labelled carbon materials as defined in any one of the previous claims, as isotopically labelled carbon supports for catalyst coated substrates and/or catalyst coated membranes, and finely dispersed electrocatalytic entities immobilized on the said isotopically labelled carbon supports, wherein the said electrocatalytic entities are selected from
(i) metal nanoparticles, metal clusters, metal single sites,
(ii) nanoparticles or clusters of metallic oxides, carbides, nitrides, sulfides, selenides, phosphides, or coordination complexes,
(iii) alloyed configurations of the entities mentioned under (i) or (ii), comprising several metals,
(iv) organic moieties,
(v) biochemical entities such as enzymes and living cells,
(vi) any mixtures of the above.

6. Carbon electrode comprising one or several isotopically labelled carbon materials as defined in any one of claims 1 to 4.

7. Carbon electrode according to claim 6, which is a layered carbon electrode comprising individual layers of isotopically labelled carbon materials as defined in any one of claims 1 to 4 and individual layers of unlabelled carbon materials.

8. Method of production of an isotopically labelled carbon material according to any of the previous claims comprising the formation of isotopically labelled N-HTC or of isotopically labelled MPNC.

9. Method according to claim 8, wherein the said isotopically labelled N-HTC is formed by hydrothermal carbonisation of biomass or a biomass-derivative in the presence of an amine, wherein the said biomass or biomass-derivative comprises ¹³C-labelled and/or ¹⁵N-labelled biomass or biomass-derivative, or wherein the amine comprises ¹³C-labelled and/or ¹⁵N-labelled amine.

10. Method according to claim 9, wherein the said biomass or biomass-derivative is a saccharide or a saccharide-derivative, such as for example glucose or a glucose-derivative, and/or wherein the said amine is a protein, such as for example ovalbumin.

11. Method according to claim 9 or 10, wherein the said biomass or biomass-derivative is fully ¹³C-labelled and/or fully ¹⁵N-labelled, or wherein the said biomass or biomass-precursor is partially ¹³C-labelled and/or partially ¹⁵N-labelled.

12. Method according to any one of claims 9 to 11, wherein the said biomass or biomass-derivative consists of ¹³C-labelled biomass or biomass-derivative, and/or wherein the said biomass or biomass-derivative consists of ¹⁵N-labelled biomass or biomass-derivative, or wherein the said biomass or biomass-derivative further comprises unlabelled biomass or biomass-derivative.

13. Method according to claim 8, wherein the said isotopically labelled MPNC is formed by oxidative polymerisation of a polymerisation precursor selected from aniline, phenazine, carbazole, pyrrole, dopamine, thiophene or derivatives thereof in the presence of an inorganic colloidal nanotemplate or a structure-directing agent, followed by carbonisation and nanotemplate or structure-directing agent removal, wherein the said polymerisation precursor comprises ¹³C-labelled and/or ¹⁵N-labelled polymerisation precursor.

14. Method according to claim 13, wherein the said polymerisation precursor is fully ¹³C-labelled and/or ¹⁵N-labelled, or wherein the said polymerisation precursor is partially ¹³C-labelled and/or ¹⁵N-labelled.

15. Method according to claim 13 or 14, wherein the said polymerisation precursor consists of ¹³C-labelled polymerisation precursor and/or of ¹⁵N-labelled polymerisation precursor, or wherein the said polymerisation precursor further comprises unlabelled polymerisation precursor.

16. Method according to any one of claims 9 to 15, wherein the total ¹³C-content of the biomass or biomass-derivative is in the range of greater than 1.06% to 100% of the total number of carbon atoms in the biomass or biomass-derivative and/or wherein the total ¹⁵N-content of the biomass or biomass-derivative is in the range of greater than 0.4% to 100% of the total number of nitrogen atoms in the biomass or biomass-derivative, or wherein the total ¹³C-content of the polymerisation precursor is in the range of greater than 1.06% to 100% of the total number of carbon atoms in the polymerisation precursor, and/or wherein the total ¹⁵N-content of the polymerisation precursor is in the range of greater than 0.4% to 100% of the total number of nitrogen atoms in the polymerisation precursor.

17. Use of the isotopically labelled carbon material of any one of claims 1 to 4 in the formation of a carbon electrode or an electrochemically active carbon composite such as an electrocatalyst and a carbon electrode derived therefrom.

18. Use of the isotopically labelled carbon material of any one of claims 1 to 4 or of a carbon electrode or an electrochemically active carbon composite such as an electrocatalyst and a carbon electrode derived therefrom in a stress test for determining the amount and nature of carbon support degradation in operation, optionally, wherein the isotopically labelled carbon material is employed in combination with a carbon material, which is not based on N-HTC or MPNC.
